# EUROPEAN PATENT APPLICATION

(11) **EP 2 116 876 A1**
(43) Date of publication of application: **11.11.2009**
(21) Application number: 09005919.7
(22) Date of filing: 29.04.2009
(51) Int. Cl.: G02B 6/02

(54) **Optical data communication cable**

(30) Priority: 08.05.2008 NL 1035403
(71) Applicant: Draka Comteq B.V., 1083 HJ Amsterdam (NL)
(72) Inventor: Matthijsse, Pieter, 5527 AA Hapert (NL)
(74) Representative: Blokland, Arie

(57) **Abstract**

The present invention relates to a data communication cable comprising a plurality of optical glass fibres, in which optical glass fibres of the fluorine-doped graded-index multimode glass fibre type are used. The present invention further relates to the use of fluorine-doped graded-index multimode optical glass fibres in an optical glass fibre ribbon.

The object of the present invention is to provide a data communication cable in which the maximum difference in signal propagation time between the channels in the data communication cable is reduced to a minimum.

## Description

The present invention relates to a data communication cable comprising a plurality of optical glass fibres, which optical glass fibres are arranged side by side. The present invention further relates to the use of fluorine-doped graded-index multimode optical glass fibres in a data communication cable, as well as to the use of such a data communication cable in a data communication system.

A special type of data communication cable, viz. an optical fibre ribbon, is known, for example from European patent No. 1 279 983 in the name of the present inventor. A ribbon of optical glass fibres is obtained by using a plurality of optical glass fibres, which are arranged parallel to each other in a matrix material. An optical fibre ribbon is formed by embedding a plurality of optical glass fibres in a common matrix material, each optical fibre in the matrix material being embedded in a single-layer or multilayer coating of a UV curable resin, for example a UV acrylate. The optical fibre ribbon is obtained by arranging the thus coated optical glass fibres side by side in a flat configuration in a matrix material. The optical glass fibres to which the present application relates have been obtained from so-called glass preforms, which preforms are heated in a suitable drawing tower for obtaining the intended glass fibre.

Optical fibre ribbons are used for data communication applications in which a high data speed is used. The effective high data speed is obtained by parallel transmission on a plurality of glass fibres, using a correspondingly lower speed. However, in such a situation a delay time occurs for each optical fibre, which may lead to differences in the signal arrival times between respective fibre channels. This leads to a spreading between the light pulses on the various optical glass fibres, which phenomenon is referred to as "Skew" in practice. Skew is the maximum difference in signal propagation time between the channels in the optical fibre ribbon. Skew is an important factor in determining the maximum speed of synchronous parallel data transmission.

In practice, skew is for example compensated by using special electronics in the receiver at the end of the parallel transmission channel. The differences in the delay time that occur are attributed to differences in the various optical glass fibres and to differences in the cabling characteristic of each individual fibre, viz. the tension differences between the inner and the outer glass fibres of the optical fibre ribbon. For a fibre manufacturer it is therefore advisable to market glass fibres exhibiting a minimum delay time for each fibre.

From US patent No. 5,768,460 there is known an optical fibre ribbon in which the delay time would be minimized by selecting the glass fibres used in the optical fibre ribbon from the same original drawing batch. Said US patent further indicates that a minimized delay time could be realised by using a reinforcing element in the optical fibre ribbon, so that the tension exerted on the optical glass fibres is made uniform. It is furthermore indicated in said US patent that the provision of an external coating comprising an antistatic material would have an advantageous effect on the minimization of the difference in delay time between the optical glass fibres used in the optical fibre ribbon.

Japanese patent application JP 2002/202446 discloses an optical fibre tape in which optical glass fibres are used whose refractive index difference at the two ends must not exceed 0.01%, after which such optical glass fibres are formed into a tape, using a matrix material, which tape is asserted to exhibit a Skew value < 0.6 ps/m.

From Japanese patent application JP 2002/207144 there is known a multimode optical fibre ribbon comprising optical glass fibres exhibiting a difference between the maximum and the minimum value of the numerical aperture (NA) of at most 0.002.

The present inventors have furthermore found that the differences in delay time for each optical fibre may be caused by a number of effects, in which regard the numerical aperture (NA) of the optical fibre, the used wavelength range of the transmission system and the differential mode delay (DMD) may be mentioned.

The object of the present invention is therefore to provide a data communication cable in which the maximum difference in signal propagation time between the channels in the data communication cable is reduced to a minimum.

Accordingly, the present invention as referred to in the introduction is **characterised in that** optical glass fibres of the fluorine-doped graded-index multimode glass fibre type are used in the data communication cable.

Differences in the NA of the optical glass fibre are mainly caused by doping differences in the centre of the core of an optical glass fibre. The graded-index refractive index profiles in optical glass fibres are obtained by adding one or more dopants to the core of the optical glass fibre and by having the concentration of said dopants vary as a function of the radius. By using fluorine as a dopant it becomes possible to manufacture a graded-index optical glass fibre in which the concentration of dopants in the centre of the core is practically zero. Such fibres exhibit a very small NA tolerance. The centre of the core of such glass fibres can be said to consist of practically "pure" quartz glass.

Using multimode glass fibres of this type, the present inventors have found that the NA tolerances no longer adversely affect the delay time of the lower-order mode groups, because said mode groups propagate mainly in the centre of the optical fibre core. Thus it is possible to develop a data communication cable and use it in a data communication system in which the maximum difference in signal propagation time between the channels in the data communication cable is reduced to a minimum.

The present invention further relates to the use of optical glass fibres in a data communication system, of which glass fibres the fluorine content of the fluorine-doped graded-index multimode glass fibres in the centre of the light-conducting core is practically zero. In such a data communication system, the refractive index profile of the core of the optical fibre is constructed so that the fluorine content in the centre of the core is practically zero, said fluorine content preferably amounting to zero.

The present invention further relates to the use of such fluorine-doped graded-index multimode glass fibres in a data communication cable, in which the fluorine content of the fluorine-doped graded-index multimode glass fibres in the centre of the core is practically zero.

Using fluorine-doped graded-index multimode glass fibres according to the present invention, the differences in delay time of optical signals in such an optical fibre ribbon can be reduced to a value < 0.5 ps/m. It is in particular desirable to have parallel transmission take place through two or more optical glass fibres arranged side by side, viz. embedded in a polymeric material, in particular an optical fibre ribbon.

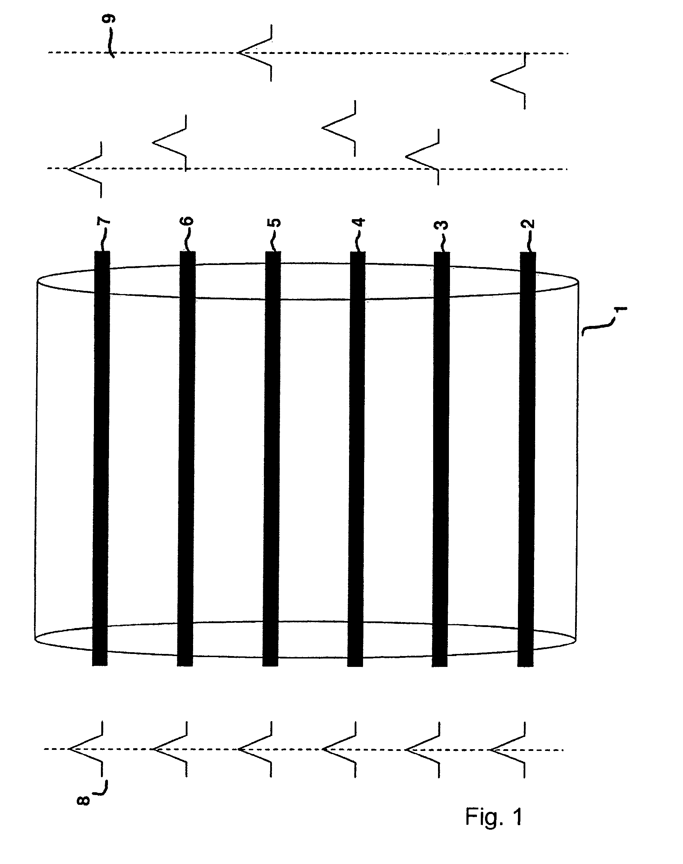

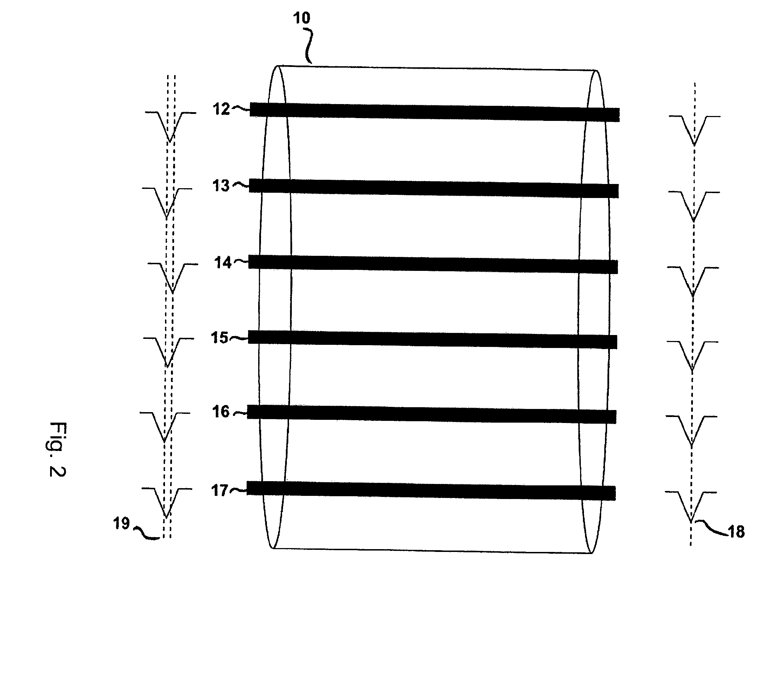

The present invention will now be explained in more detail with reference to two figures, of which figure 1 shows a prior art optical fibre ribbon as an example of a data communication cable, and figure 2 shows an optical fibre ribbon according to the present invention, each with incoming and outgoing light signals.

In the appended figure 1 it is schematically indicated what the delay time of optical signals in a prior art optical fibre ribbon means. In an optical fibre ribbon 1 composed of individual optical glass fibres 2-7, which optical glass fibres 2-7 are tightly embedded in a matrix material, for example a UV curable resin material, a light pulse 8 is applied to each optical fibre 2-7, which light pulse 8 exhibits a number of output pulses 9 at the end of the optical fibre ribbon 1. For easy reference, the coating(s) on the outer side of the optical glass fibres 2-7 and 12-17 are not shown in the figures. It should be noted that although the ribbon shown in figures 1 and 2 comprises six parallel optical glass fibres, it is also possible to use different numbers of optical glass fibres. Furthermore, embodiments of ribbons are conceivable in which the optical glass fibres are arranged in "stacked" planes, in which planes the optical glass fibres are arranged parallel to each other. Figure 1 clearly shows that the light pulses applied at the same point in time each exhibit a different, in time, output signal 9 upon exiting the optical fibre ribbon 1, with the skew being represented as the delay time, or, in other words, the difference in time within which the fastest and the slowest pulse have exited the optical fibre ribbon. By using the optical glass fibres 12-17 of the fluorine-doped graded-index multimode type in the optical fibre ribbon 10, as is schematically shown in figure 2, with the fluorine content of the fluorine-doped graded-index multimode glass fibres in the centre of the light-conducting core being practically zero, it has been found to be possible to reduce the skew to a value < 0.5 ps/m, which is thus schematically shown in figure 2 in that the light pulses 19 exiting the optical glass fibres 12-17 exhibit practically no difference in delay time, the applied light pulses being indicated at 18.

## Claims

1. A data communication cable comprising a plurality of optical glass fibres, which optical glass fibres are arranged side by side, **characterised in that** optical glass fibres of the fluorine-doped graded-index multimode glass fibre type are used in the data communication cable.

2. A data communication cable according to claim 1, **characterised in that** the fluorine content of the fluorine-doped graded-index multimode glass fibres in the centre of the light-conducting core is practically zero.

3. A data communication cable according to one or both of claims 1 or 2, **characterised in that** the optical glass fibres are arranged side by side, being tightly embedded in a matrix material.

4. A data communication cable according to one or more of the preceeding claims, **characterised in that** the centre of the core of the glass fibres consists of pure quartz glass.

5. Use of fluorine-doped graded-index multimode optical glass fibres in a data communication cable.

6. Use of fluorine-doped graded-index multimode optical glass fibres having a fluorine content of practically zero in the centre of the light-conducting core in a data communication cable.

7. Use of fluorine-doped graded-index multimode optical glass fibres in a data communication system in which parallel transmission through two or more optical glass fibres arranged side by side takes place.

8. Use of fluorine-doped graded-index multimode optical glass fibres in which the fluorine content in the centre of the light-conducting core is practically zero in which parallel transmission through two or more optical glass fibres arranged side by side takes place.

9. Use of fluorine-doped graded-index multimode optical glass fibres in a data communication cable wherein the centre of the core of these glass fibers consists of pure quartz glass.

10. Use of fluorine-doped graded-index multimode optical glass fibres in a data communication cable according to one or more of claims 5-9 for reducing the differences in delay time of optical signals to a value < 0.5 ps/m.

11. Use of a data communication cable according to one or more of claims 1-4 in a data communication system in which parallel transmission through two or more optical glass fibres arranged side by side takes place.

12. Use according to claim 11 for reducing the differences in delay time of optical signals to a value < 0.5 ps/m.
